# EUROPEAN PATENT APPLICATION

(11) **EP 4 657 684 A1**
(43) Date of publication of application: **03.12.2025**
(21) Application number: 24214884.9
(22) Date of filing: 22.11.2024
(51) Int. Cl.: H02G 3/06, H02G 3/22, H02G 15/013

(54) **CABIN PENETRATION MEMBER AND BATTERY PACK**

(30) Priority: 27.05.2024 CN 202421179760 U; 29.07.2024 WO PCT/CN2024/108056
(71) Applicant: Eve Energy Storage Co., Ltd., Wuhan, Hubei 430000 (CN)
(72) Inventor: CHENG, Si, 430000 WUHAN (CN); ZHUO, Wei, 430000 WUHAN (CN); LIU, Jianbo, 430000 WUHAN (CN); YI, Haohao, 430000 WUHAN (CN); ZHU, Yuan, 430000 WUHAN (CN)
(74) Representative: Cabinet Beaumont

(57) **Abstract**

Provided are a cabin penetration member and a battery pack. The cabin penetration member is formed with a wire penetration hole that extends through the cabin penetration member and is configured for a wire harness to penetrate through. The wire penetration hole is sealed and filled with colloid. The cabin penetration member includes a blocking portion and a pluggable portion. The blocking portion is configured to be inserted into the cabin penetration hole of the housing of the battery pack. A first end of the pluggable portion in the axial direction of the pluggable portion is protrudingly provided with the blocking portion. The end face of the first end has a colloid coating region disposed around the blocking portion in a circumferential direction of the blocking portion. The colloid coating region is coated with colloid.

## Description

### TECHNICAL FIELD

The present application relates to the field of battery technology, for example, a cabin penetration member and a battery pack.

### BACKGROUND

In an immersion battery pack, a cooling medium is disposed in the housing of the battery pack, and the cell is immersed in the cooling medium to exchange heat with the cell through the cooling medium to cool the cell.

During the thermal runaway test of the immersion battery pack, a thermocouple is disposed on the cell inside the housing. A thermocouple wire needs to be led out from the housing to transmit the acquired cell temperature changes to a testing platform. In the related art, in an immersion battery pack, it is important to drill cabin penetration holes in the housing to implement the cabin penetration of a thermocouple wire. However, there may be a gap between the thermocouple wire and a cabin penetration hole. As a result, the sealing property of the housing is reduced, and it is difficult to reach the protection level of the housing of the battery pack.

### SUMMARY

The present application provides a cabin penetration member and a battery pack, so that the poor sealing property of the housing of the battery pack can be alleviated when there is a cabin penetration situation.

In a first aspect, an embodiment of the present application provides a cabin penetration member. The cabin penetration member is formed with a wire penetration hole that extends through the cabin penetration member in the axial direction of the cabin penetration member and is configured for a wire harness to penetrate through. The wire penetration hole is sealed and filled with colloid. The cabin penetration member includes a blocking portion and a pluggable portion. The blocking portion is configured to be inserted into the cabin penetration hole of the housing of the battery pack. The first end of the pluggable portion in the axial direction of the pluggable portion is protrudingly provided with the blocking portion. The end face of the first end has a colloid coating region disposed around the blocking portion in a circumferential direction of the blocking portion. The colloid coating region is coated with colloid to enable the end face of the first end to be sealed and adhered to the wall plate of the housing having a cabin penetration hole.

In a second aspect, an embodiment of the present application provides a battery pack. The battery pack includes a housing having a cabin penetration hole, and the preceding cabin penetration member. The cabin penetration member is inserted into the cabin penetration hole of the housing.

The present application provides a cabin penetration member. The blocking portion of the cabin penetration member is inserted into the cabin penetration hole of the housing of a battery pack. The colloid coating region of the first end of the pluggable portion of the cabin penetration member is coated with colloid, so that the first end of the pluggable portion can be sealed and adhered to the wall plate of the housing having the cabin penetration hole. In this manner, the cabin penetration member is sealed and mounted in the housing. At the same time, the wire harness in the housing passes through the wire penetration hole of the cabin penetration member. The wire penetration hole is sealed and filled with colloid to fix the wire harness and seal and block the wire penetration hole. Thus, the wire harness is sealed and mounted in the cabin penetration member, a gap between the wire harness and the cabin penetration hole is avoided, and the sealing property and the protection level of the housing are improved.

The battery pack proposed by the present application includes the preceding cabin penetration member. The cabin penetration member is mounted in the wire penetration hole of the housing. Thus, the wire harness is sealed and mounted in the housing through the cabin penetration member. In this manner, the cabin penetration of the wire harness is implemented, and the sealing property and the protection level of the battery pack are improved.

### BRIEF DESCRIPTION OF DRAWINGS

FIG. 1 is a partial view illustrating the structure of a battery pack according to an embodiment of the present application.
FIG. 2 is a longitudinal section view of a cabin penetration member according to an embodiment of the present application.
FIG. 3 is view one illustrating the structure of a cabin penetration member according to an embodiment of the present application.
FIG. 4 is view two illustrating the structure of a cabin penetration member according to an embodiment of the present application.

Names and reference numerals of components in the figure are described below.
- 100: housing
- 101: wall plate
- 102: cabin penetration hole
- 200: wire harness
- 1: cabin penetration member
- 10: wire penetration hole
- 11: blocking portion
- 111: first colloid overflow groove
- 12: pluggable portion
- 121: colloid coating region
- 122: second colloid overflow groove
- 123: third colloid overflow groove

### DETAILED DESCRIPTION

Technical solutions of the present application are further described below through embodiments in conjunction with the drawings.

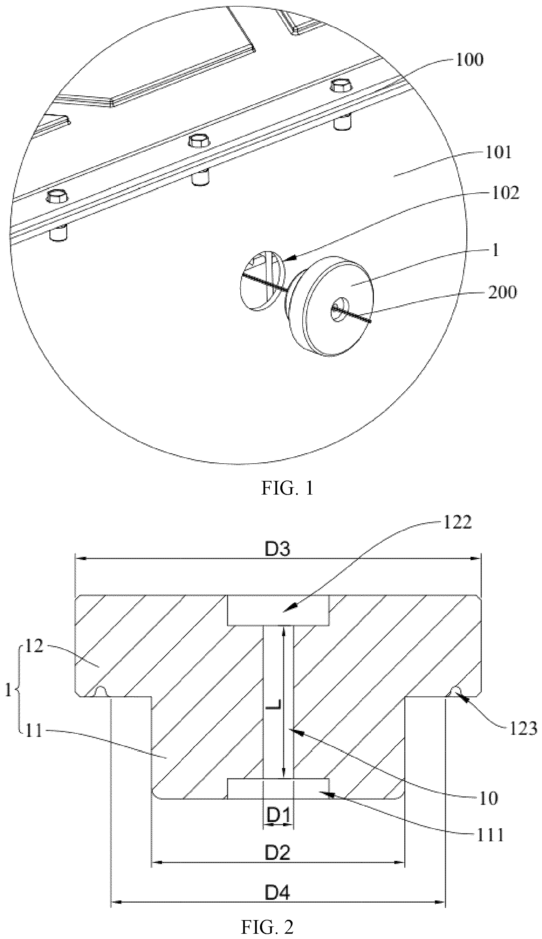

An embodiment provides a battery pack. The battery pack may be applied to electricity usage scenarios such as energy storage systems and new energy vehicles. As shown in FIG. 1, the battery pack of this embodiment may be an immersion battery pack. The immersion battery pack includes a housing 100, a cell, and a thermocouple. A cooling medium is disposed in the housing 100 of the battery pack, and the cell is immersed in the cooling medium to use the cooling medium to exchange heat with the cell to cool the cell. The battery pack of this embodiment may be a non-immersion battery pack. This is not limited in this embodiment.

During the thermal runaway test of the battery pack, the thermocouple is disposed inside the housing 100 and is configured to measure the temperature changes of the cell after the thermal runaway. A thermocouple wire needs to be led out from the housing 100 to transmit the acquired cell temperature changes to a testing platform. In the related art, in the immersion battery pack, it is important to drill cabin penetration holes in the housing to implement the cabin penetration of the thermocouple wire. However, there may be a gap between the thermocouple wire and a cabin penetration hole. As a result, the sealing property of the housing is destroyed, and it is difficult to reach the relatively high protection level of the battery pack.

To improve the preceding situation, as shown in FIG. 1 to FIG. 3, an embodiment provides a cabin penetration member 1. The cabin penetration member 1 is applied to the thermal runaway testing process of the preceding immersion battery pack. The cabin penetration member 1 may also be applied to other assembly operations that implement cabin penetration and wiring. The cabin penetration member 1 is formed with a wire penetration hole 10 that extends through the cabin penetration member 1 in the axial direction of the cabin penetration member 1 and is configured for a wire harness 200 to penetrate through. The wire penetration hole 10 is sealed and filled with colloid. The cabin penetration member 1 includes a blocking portion 11 and a pluggable portion 12. The blocking portion 11 can be inserted into the cabin penetration hole 102 of the housing 100 of the battery pack. A first end of the pluggable portion 12 in the axial direction of the pluggable portion 12 is protrudingly provided with the blocking portion 11. The end face of the first end has a colloid coating region 121 disposed around the blocking portion 11 in a circumferential direction of the blocking portion 11. The colloid coating region 121 is coated with colloid to enable the end face of the first end of the pluggable portion 12 to be sealed and adhered to the wall plate 101 of the housing 100 having a cabin penetration hole 102. The blocking portion 11 of the cabin penetration member 1 is inserted into the cabin penetration hole 102 of the housing 100 of the battery pack. The colloid coating region 121 of the first end of the pluggable portion 12 of the cabin penetration member 1 is coated with colloid, so that the first end of the pluggable portion 12 is sealed and adhered to the wall plate 101 of the housing 100 having the cabin penetration hole 102. In this manner, the cabin penetration member 1 is sealed and mounted in the housing 100. At the same time, the wire harness 200 in the housing 100 passes through the wire penetration hole 10 of the cabin penetration member 1. The wire penetration hole 10 is sealed and filled with colloid to fix the wire harness 200 and seal and block the wire penetration hole 10. Thus, the wire harness 200 is sealed and mounted in the cabin penetration member 1, a gap between the wire harness 200 and the cabin penetration hole 102 is avoided, and the sealing property and the protection level of the housing 100 are improved. The preceding colloid may be structural colloid. The structural colloid has good bonding performance, and the costs are relatively low.

In this embodiment, the cabin penetration member 1 is a rubber part, has good elastoplasticity, and is easy to be injection molded. The blocking portion 11 and the pluggable portion 12 are integrally formed by injection molding, which is simple to manufacture and has high processing efficiency. In other embodiments, the cabin penetration member 1 may be made of other materials. This is not limited in this embodiment. The cabin penetration member 1 is a stepped shaft structure, that is, the blocking portion 11 and the pluggable portion 12 are cylindrical structures. The diameter of the blocking portion 11 is less than the diameter of the pluggable portion 12 to enable the end face of the first end of the pluggable portion 12 to form a stepped surface of the cabin penetration member 1. Thus, the cabin penetration member 1 is positioned and mounted, and the first end of the pluggable portion 12 has a colloid coating region 121.

Since the colloid coating region 121 is disposed around the blocking portion 11 in a circumferential direction of the blocking portion 11, the colloid coating region 121 is annular in shape. The wire penetration hole 10 is a circular hole coaxial with the blocking portion 11. The wire harness 200 is a thermocouple wire but is not limited thereto. There may be one or more thermocouple wires. The area of the cross section of the wire penetration hole 10 is 1.3 to 1.5 times the area of the cross section of the wire harness 200, so that the area of the cross section of the wire penetration hole 10 is 30% to 50% larger than the area of the cross section of the wire harness 200 to ensure that the wire harness 200 can smoothly pass through the wire penetration hole 10, thereby reducing the wire penetration difficulty and improving the wire penetration efficiency. Moreover, the wire penetration hole 10 has a proper diameter to prevent the overall size of the cabin penetration member 1 from being too large. It is to be noted that when there are multiple wire harnesses 200, the area of the cross sections of the wire harnesses 200 refers to the sum of the cross sections of all the wire harnesses 200 passing through the wire penetration hole 10.

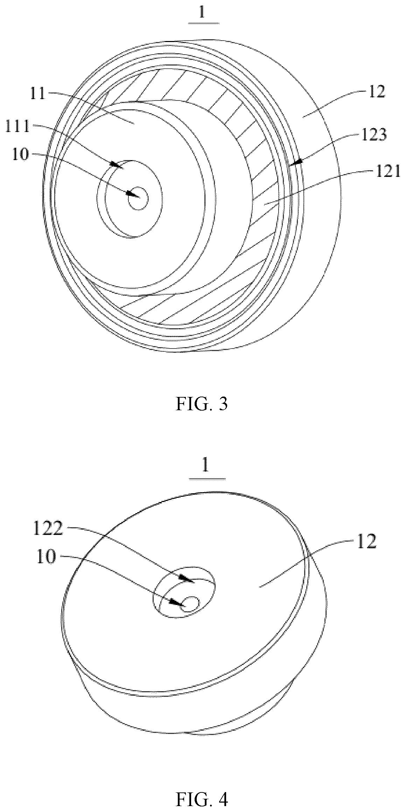

As shown in FIG. 2 and FIG. 3, a first colloid overflow groove 111 is formed on the end of the blocking portion 11 facing away from the pluggable portion 12. The first colloid overflow groove 111 communicates with one end of the wire penetration hole 10. The first colloid overflow groove 111 is configured to store excess colloid in the wire penetration hole 10 to prevent the excess colloid from overflowing to the outside of the cabin penetration member 1 and causing pollution. As shown in FIG. 2 and FIG. 4, a second colloid overflow groove 122 is formed on a second end of the pluggable portion 12 in the axial direction of the pluggable portion 12, and the second colloid overflow groove 122 communicates with the other end of the wire penetration hole 10. The second colloid overflow groove 122 is also configured to store excess colloid in the wire penetration hole 10 to prevent the excess colloid from overflowing to the outside of the cabin penetration member 1 and causing pollution. In this embodiment, two ends of the cabin penetration member 1 in the axial direction of the cabin penetration member 1 have a first colloid overflow groove 111 and a second colloid overflow groove 122 respectively, and the first colloid overflow groove 111 communicates with the second colloid overflow groove 122 through the wire penetration hole 10. In other embodiments, the first colloid overflow groove 111 may be formed on only the end of the blocking portion 11 facing away from the pluggable portion 12, or the second colloid overflow groove 122 is formed on only the second end of the pluggable portion 12 in the axial direction of the pluggable portion 12.

As shown in FIG. 2 and FIG. 3, the end face of the first end of the pluggable portion 12 is formed with a third colloid overflow groove 123 around the blocking portion 11 in a circumferential direction of the blocking portion 11, and the opening end of the third colloid overflow groove 123 communicates with the colloid coating region 121. Specifically, the end face of the first end of the pluggable portion 12 is concave to form the third colloid overflow groove 123. When the cabin penetration member 1 is mounted in the cabin penetration hole 102 of the housing 100, the end face of the first end of the pluggable portion 12 is tightly attached to the wall plate 101 of the housing 100 having the cabin penetration hole 102. The colloid of the colloid coating region 121 can enter the third colloid overflow groove 123 after being squeezed to prevent the excess colloid from overflowing to the outside of the cabin penetration member 1 and causing pollution.

In an optional embodiment, the axial length of the wire penetration hole 10 is 20 mm to 40 mm. As shown in FIG. 2, the axial length L of the wire penetration hole 10 may be 20 mm, 25 mm, 30 mm, 35 mm, and 40 mm to ensure that the length of the wire penetration hole 10 is moderate. When the axial length L of the wire penetration hole 10 is too small, the colloid in the wire penetration hole 10 is too little. As a result, it is difficult to completely seal and block the wire penetration hole 10, and the sealing property of the cabin penetration member 1 cannot be ensured. When the axial length L of the wire penetration hole 10 is too long, not only the usage amount of the colloid increases, but also the overall length of the cabin penetration member 1 is excessively long, which is not conducive to miniaturization of the cabin penetration member 1.

In an optional embodiment, the diameter D2 of the blocking portion 11 is 3 to 8 times the diameter D1 of the wire penetration hole 10, so that the end of the blocking portion 11 facing away from the pluggable portion 12 has the sufficient end face area, and the disposition space of the first colloid overflow groove 111 is reserved. The difference value between the diameter D3 of the pluggable portion 12 and the diameter D2 of the blocking portion 11 is 30 mm to 80 mm, so that the first end of the pluggable portion 12 has the sufficient end face area, and the disposition space of the colloid coating region 121 and the third colloid overflow groove 123 is reserved. The difference value between the outer diameter D4 of the colloid coating region 121 and the inner diameter of the colloid coating region 121 (that is, the diameter D2 of the blocking portion 11) is greater than 10 mm, so that the radial width of the colloid coating region 121 is greater than 5 mm. Thus, it is ensured that the colloid coating region 121 has a sufficient colloid coating area, thereby improving the tight bonding effect of the end face of the first end of the pluggable portion 12 and the wall plate 101 of the housing 100 having the cabin penetration hole 102. In this manner, the sealing property of the cabin penetration member 1 after being assembled on the housing 100 is improved.

The outer edge of the end of the blocking portion 11 facing away from the pluggable portion 12 is provided with a rounded corner. The outer edge of the end of the blocking portion 11 facing away from the pluggable portion 12 is rounded, so that the outer edge of the end of the blocking portion 11 facing away from the pluggable portion 12 forms a guide circular arc surface to guide the blocking portion 11 to be quickly inserted into the cabin penetration hole 102. In this manner, it is beneficial to improve the mounting efficiency of the cabin penetration member 1.

In this embodiment, the outer edge of the first end and the outer edge of the second end of the pluggable portion 12 in the axial direction of the pluggable portion 12 are provided with chamfers respectively. The outer edge of the first end and the outer edge of the second end of the pluggable portion 12 in the axial direction of the pluggable portion 12 are provided with right angle structures respectively to remove the burrs at the edge of the pluggable portion 12 and improve the quality of the cabin penetration member 1. At the same time, the first end of the pluggable portion 12 in the axial direction of the pluggable portion 12 is provided with a right angle structure to facilitate the pick and place operation when the cabin penetration member 1 is manually plugged and unplugged. Thus, the cabin penetration member 1 is quickly mounted in the housing 100 or quickly unplugged from the housing 100. In this manner, the disassembly and assembly difficulty of the cabin penetration member 1 is reduced, and the disassembly and assembly efficiency of the cabin penetration member 1 is improved.

## Claims

1. A cabin penetration member, formed with a wire penetration hole (10) that extends through the cabin penetration member (1) in an axial direction of the cabin penetration member (1) and is configured for a wire harness (200) to penetrate through, wherein the wire penetration hole (10) is sealed and filled with colloid; and
the cabin penetration member (1) comprises a blocking portion (11) and a pluggable portion (12), the blocking portion (11) is configured to be inserted into a cabin penetration hole (102) of a housing (100) of a battery pack, a first end of the pluggable portion (12) in an axial direction of the pluggable portion (12) is protrudingly provided with the blocking portion (11), an end face of the first end has a colloid coating region (121) disposed around the blocking portion (11) in a circumferential direction of the blocking portion (11), and the colloid coating region (121) is coated with colloid to enable the end face of the first end to be configured to be sealed and adhered to a wall plate (101) of the housing (100) having the cabin penetration hole (102).

2. The cabin penetration member according to claim 1, wherein the cabin penetration member (1) is disposed in at least one of following manners:
a first colloid overflow groove (111) is formed on an end of the blocking portion (11) facing away from the pluggable portion (12), and the first colloid overflow groove (111) communicates with one end of the wire penetration hole (10); and
a second colloid overflow groove (122) is formed on a second end of the pluggable portion (12) in the axial direction of the pluggable portion (12), and the second colloid overflow groove (122) communicates with another end of the wire penetration hole (10).

3. The cabin penetration member according to claim 1, wherein the end face of the first end of the pluggable portion (12) is formed with a third colloid overflow groove (123) around the blocking portion (11) in a circumferential direction of the blocking portion (11), and an opening end of the third colloid overflow groove (123) communicates with the colloid coating region (121).

4. The cabin penetration member according to claim 1, wherein an area of a cross section of the wire penetration hole (10) is configured to be 1.3 to 1.5 times an area of a cross section of the wire harness (200).

5. The cabin penetration member according to claim 1, wherein an axial length of the wire penetration hole (10) is 20 mm to 40 mm.

6. The cabin penetration member according to any one of claims 1 to 5, wherein the cabin penetration member (1) is a stepped shaft structure, a diameter of the blocking portion (11) is less than a diameter of the pluggable portion (12), and the colloid coating region (121) is annular in shape.

7. The cabin penetration member according to claim 6, wherein the wire penetration hole (10) is a circular hole coaxial with the blocking portion (11), and the diameter of the blocking portion (11) is 3 to 8 times a diameter of the wire penetration hole (10).

8. The cabin penetration member according to claim 7, wherein a difference value between the diameter of the pluggable portion (12) and the diameter of the blocking portion (11) is 30 mm to 80 mm.

9. The cabin penetration member according to claim 6, wherein a difference value between an outer diameter of the colloid coating region (121) and an inner diameter of the colloid coating region (121) is greater than 10 mm.

10. A battery pack, comprising:
a housing (100) having a cabin penetration hole (102); and
the cabin penetration member according to any one of claims 1 to 9, wherein the cabin penetration member is inserted into the cabin penetration hole (102) of the housing (100).
